# EUROPÄISCHE PATENTSCHRIFT

(11) **EP 3 822 025 B1**
(45) Veröffentlichungstag und Bekanntmachung des Hinweises auf die Patenterteilung: **02.08.2023**
(21) Anmeldenummer: 20193709.1
(22) Anmeldetag: 31.08.2020
(51) Int. Cl.: B25B 5/10, B25B 5/12, B25B 5/14, F16L 3/24, F16L 3/10

(54) **EINSPANNBEFESTIGUNG**
CLAMPING FIXTURE
FIXATION DE SERRAGE

(30) Priorität: 12.11.2019 DE 102019130478
(43) Veröffentlichungstag der Anmeldung: 19.05.2021
(73) Patentinhaber: Sikla Holding GmbH, 4614 Marchtrenk (AT)
(72) Erfinder: Menz, Peter, 78661 Dietingen (DE); Braack, Ellen, 78549 Spaichingen (DE)
(74) Vertreter: Mertzlufft-Paufler, Cornelius

(56) Entgegenhaltungen:
- EP-A2- 1 043 532
- DE-A1- 19 961 003
- DE-C1- 4 435 556
- DE-C1- 19 653 538
- DE-U1- 29 513 823
- DE-U1- 29 515 032
- DE-U1- 29 922 212
- DE-U1-202010 006 322

## Beschreibung

Die Erfindung betrifft eine Einspannbefestigung mit zumindest einem Spannhaken, der zwei Hakenarme hat, von denen ein erster Hakenarm eine Auflagefläche zur Auflage auf einem Trägerelement aufweist und von denen ein zweiter Hakenarm eine Klemmfläche hat, die mit der Auflagefläche eine Hakenöffnung begrenzt und die relativ zur Auflagefläche derart im Winkel angeordnet ist, dass die Klemmfläche an dem der Auflagefläche abgewandten Rand des Trägerelements angreift, wobei der erste Hakenarm zumindest eine Befestigungsöffnung aufweist, die einen Gewindestab durchsetzt, auf den eine Spannmutter aufgeschraubt ist, die den Spannhaken in einer Halteposition am Trägerelement druckbeaufschlagt, und wobei der zumindest eine Spannhaken mittels der Spannmutter in einem unterhalb der zumindest einen Befestigungsöffnung angeordneten Teilbereich des Spannhakens druckbeaufschlagbar ist.

Einspannbefestigungen der eingangs erwähnten Art sind bereits bekannt, um die Anbindung einer Rohrhalterung an dem als Trägerelement dienenden oberen Flansch eines T-Trägers zu bewerkstelligen. Dokument EP 1 043 532 A2 offenbart eine Einspannbefestigung nach dem Oberbegriff des Anspruchs 1. So ist bereits aus Figur 1 der EP 1 043 532 A2 eine gattungsgemäße Einspannbefestigung mit Spannhaken vorbekannt, die einander paarweise zugeordnet sind. Die Spannhaken eines jeden Spannhaken-Paares greifen beidseits randseitig am Flansch des T-Trägers an. Jeder der Spannhaken hat zwei Hakenarme, von denen ein erster Hakenarm eine Auflagefläche zur Auflage an dem Trägerelement aufweist und von denen ein zweiter Hakenarm eine Klemmfläche hat, die mit der Auflagefläche eine Hakenöffnung begrenzt und die relativ zur Auflagefläche derart in einem Winkel von beispielsweise 45 Grad angeordnet ist, dass die Klemmfläche an dem der Auflagefläche abgewandten Rand des Trägerelements angreift.

Der erste Hakenarm weist zumindest eine Befestigungsöffnung auf, die zwangsläufig oberhalb der durch die Auflagefläche gebildeten Ebene angeordnet ist und die ein Gewindestab durchsetzt. Jeder Gewindestab trägt beidseits des Flansches jeweils einen der einander paarweise zugeordneten Spannhaken, so dass die Spannhaken den Flansch zwischen sich einspannen und die Einspannbefestigung fest am T-Träger halten können. Auf die beiden freien Enden des Gewindestabes ist jeweils eine Spannmutter aufgeschraubt, die den benachbarten Spannhaken in einer Halteposition am Trägerelement des T-Trägers druckbeaufschlagt. Durch das Anziehen der Spannmuttern werden die zu den Spannmuttern benachbarten Spannhaken gegen den als Trägerelement dienenden Flansch des T-Trägers gedrückt, wobei jeder der Spannhaken mittels der benachbarten Spannmutter in einem unterhalb der Befestigungsöffnung angeordneten Teilbereich des Spannhakens druckbeaufschlagbar ist. Durch das Abstandsmaß von Trägerflanschoberkante zum Druckpunkt der Spannmutter, d.h. dem Kraftangriffspunkt der Spannmutter am Flansch, wird ein Drehmoment erzeugt, welches die relativ zur Auflagefläche am ersten Hakenarm vorzugsweise um etwa 45 Grad geneigte Klemmfläche des Spannhakens unter dem Trägerflansch herauszieht. Durch diese Verdrehung des Spannhakens nach dem Anziehen der Spannmutter wird die mögliche Kraftaufnahme des Spannhakens der vorbekannten Einspannbefestigung deutlich vermindert.

Aus der DE 295 15 032 U1 ist eine Einspannbefestigung mit zumindest einem Spannhaken vorbeschrieben, der zwei Hakenarme aufweist, die jeweils einen ersten Schenkel haben, der im montierten Zustand im Wesentlichen senkrecht zu einem Flansch eines T-Trägers verläuft, wobei jeder dieser ersten Schenkel mit einem zweiten Schenkel verbunden ist, der schräg oder etwa im rechten Winkel zu dem ersten Schenkel verläuft und im montierten Zustand den Flansch des Profilträgers untergreift. Dabei ist an den ersten Schenkeln jeweils eine Befestigungsöffnung zur Aufnahme eines als Spannelement dienenden Gewindestabes vorgesehen. Um die aus DE 295 15 032 U1 vorbekannte Einspannbefestigung möglichst einfach und kostengünstig herstellen zu können, bestehen der erste und der zweite Schenkel eines jeden Hakenarmes aus einem Blechstück, wobei die Schrägstellung beziehungsweise Winkellage des ersten Schenkels zum zweiten Schenkel durch Biegen gebildet ist. Da bei den Hakenarmen dieser vorbekannten Einspannbefestigung die Schrägstellung beziehungsweise die Winkellage zwischen den Schenkeln durch Biegen gebildet ist, und da bei einer überstarken Druckbeaufschlagung der Schenkel die Gefahr des Rückbiegens besteht, ist bei der aus DE 295 15 032 U1 vorbekannten Einspannbefestigung die Kraft, mit der die Schenkel der Hakenarme gegen den Flansch gedrückt werden können, noch zusätzlich begrenzt.

Es besteht daher die Aufgabe, eine Einspannbefestigung der eingangs erwähnten Art zu schaffen, bei der einem Verdrehen des Spannhakens nach dem Anziehen der Spannmuttern und einer unerwünschten Verminderung der möglichen Kraftaufnahme der Spannhaken wirkungsvoll entgegengewirkt wird.

Die erfindungsgemäße Lösung dieser Aufgabe besteht bei der Einspannbefestigung der eingangs erwähnten Art insbesondere darin, dass auf dem Gewindestab zwischen der Spannmutter und dem Spannhaken eine Druckhülse vorgesehen ist, dass der Spannhaken mittels der Spannmutter über die Druckhülse druckbeaufschlagbar ist, welche Druckhülse den Spannhaken in dem unterhalb der zumindest einen Befestigungsöffnung angeordneten Teilbereich des Spannhakens beaufschlagt, dass der Spannhaken eine Schrägfläche aufweist, die in Spannrichtung der Spannmutter schräg auf die Befestigungsöffnung hin zuläuft, und dass die Druckhülse den Spannhaken im Bereich dieser Schrägfläche beaufschlagt Auch die erfindungsgemäße Einspannbefestigung weist Spannhaken auf, die einander paarweise zugeordnet sind. Jeder dieser Spannhaken hat zwei Hakenarme, von denen ein erster Hakenarm eine Auflagefläche zur Auflage auf einem Trägerelement aufweist und von denen ein zweiter Hakenarm eine Klemmfläche hat, die mit der Auflagefläche eine Hakenöffnung begrenzt. Die Klemmfläche ist relativ zur Auflagefläche derart im Winkel angeordnet, dass die Klemmfläche an dem der Auflagefläche abgewandten Rand des Trägerelements angreift. Der erste Hakenarm eines jeden Spannhakens weist zumindest eine Befestigungsöffnung auf, die ein Gewindestab durchsetzt. Auf das freie Stabende des Gewindestabes ist eine Spannmutter aufgeschraubt, die den zumindest einen Spannhaken der erfindungsgemäßen Einspannbefestigung in einer Halteposition am Trägerelement druckbeaufschlagt. Auch die zumindest eine Befestigungsöffnung am ersten Hakenarm des Spannhakens ist auf der dem zweiten Hakenarm abgewandten Seite der durch die Auflagefläche gebildeten Ebene angeordnet. Dabei wird der Spannhaken mittels der Spannmutter in einem unterhalb der zumindest einen Befestigungsöffnung und insbesondere unterhalb der durch die Auflagefläche gebildeten Ebene angeordneten Teilbereichs druckbeaufschlagt. Da der Eintrag der mittels der Spannmutter aufgebrachten Einspannkraft bei der erfindungsgemäßen Einspannbefestigung vorzugsweise auf der dem zweiten Hakenarm zugewandten Seite der durch die Auflagefläche gebildeten Ebene erfolgt, wird ein unerwünschtes Verkippen und Abziehen des Einspannhakens nach dem Festziehen der den Spannhaken beaufschlagenden benachbarten Spannmutter vermieden. Die erfindungsgemäße Einspannbefestigung begünstigt somit eine größtmögliche Kraftaufnahme des Spannhakens nach dem Anziehen der benachbarten Spannmutter.

Erfindungsgemäß ist vorgesehen, dass auf dem Gewindestab zwischen der Spannmutter und dem Spannhaken eine Druckhülse vorgesehen ist, und dass der Spannhaken mittels der Spannmutter über die Druckhülse druckbeaufschlagbar ist, welche Druckhülse den Spannhaken in dem unterhalb der zumindest einen Befestigungsöffnung und insbesondere in dem unterhalb der durch die Auflagefläche gebildeten Ebene angeordneten Teilbereich des Spannhakens beaufschlagt. Bei der erfindungsgemäßen Einspannbefestigung ist also auf dem Gewindestab zwischen der Spannmutter und dem zumindest einen Spannhaken eine Druckhülse vorgesehen, welche die mittels der Spannmutter aufgebrachte Einspannkraft vorzugsweise auf der dem zweiten Hakenarm zugewandten Seite der durch die Auflagefläche gebildeten Ebene in den Spannhaken einbringt. Diese Druckhülse beaufschlagt den Spannhaken in einem unterhalb der zumindest einen Befestigungsöffnung und insbesondere unterhalb der durch die Auflagefläche gebildeten Ebene angeordneten Teilbereich. Dadurch wird ein unerwünschtes Verkippen und Abziehen des Einspannhakens nach dem Festziehen der den Spannhaken über die Druckhülse beaufschlagenden benachbarten Spannmutter vermieden, da auch hier der Eintrag der mittels der Spannmutter aufgebrachten Einspannkraft vorzugsweise auf der dem zweiten Hakenarm zugewandten Seite der durch die Auflagefläche gebildeten Ebene erfolgt.

Damit die durch die Spannmutter ausgeübte und mittels der Druckhülse vermittelte Einspannkraft gezielt in den Spannhaken eingebracht werden kann, weist der Spannhaken eine Schrägfläche auf, die in Spannrichtung der Spannmutter schräg auf die Befestigungsöffnung hin zuläuft, wobei die Druckhülse den Spannhaken im Bereich dieser Schrägflächen beaufschlagt.

Damit die Einspannkraft mittels der Spannmutter unterhalb der durch die Auflagefläche gebildeten Ebene in den Spannhaken eingebracht werden kann, obwohl der Spannhaken auf den die oberhalb davon angeordnete Befestigungsöffnung durchsetzenden Gewindestab aufgeschraubt ist, ist es vorteilhaft, wenn die Druckhülse einen Vorsprung hat, mit dem sie den Spannhaken beaufschlagt. Diese Druckhülse steht vorzugsweise radial über den Hülsenumfang der Druckhülse vor.

Sofern bei einer vereinfachten Ausführung auf die Druckhülse verzichtet werden soll, kann die Spannmutter auch als an sich handelsübliche Flanschmutter ausgebildet sein, deren Flanschdurchmesser an der dem Spannhaken zugewandten Flansch-Stirnfläche so bemessen ist, dass die als Flanschmutter ausgebildete Spannmutter den Spannhaken in dem unterhalb der zumindest einen Befestigungsöffnung angeordneten Teilbereich druckbeaufschlagt.

Bei einer solchen Ausführungsform könnte auch am Spannhaken ein von der Spannmutter unmittelbar beaufschlagter Vorsprung vorgesehen sein, wobei auch hier der äußere, dem Spannhaken zugewandte Durchmesser der vorzugsweise als Flanschmutter ausgebildeten Spannmutter so vergrößert ist, dass die Spannmutter flächig auf diesem Vorsprung zu liegen kommt.

Die Einspannkraft kann auch durch eine am Gewindestab wirkende Zugkraft erzeugt werden, die bewirkt, dass die Spannmutter den Spannhaken durckbeaufschlagen kann. Eine besonders einfache Ausführungsform gemäß der Erfindung sieht jedoch vor, dass die Einspannkraft durch Aufschrauben der Spannmutter auf das Außengewinde des Gewindestabs erzeugt wird.

Damit mit Hilfe der zumindest einen Spannmutter die erforderliche Einspannkraft auf den Spannhaken ausgeübt werden kann, ist es vorteilhaft, wenn die Druckhülse verschieblich auf dem Gewindestab gehalten ist, und wenn die Druckhülse dabei mit dem Außengewinde des Gewindestabes außer Eingriff ist.

Die erfindungsgemäße Einspannbefestigung lässt sich an jedem geeigneten Trägerelement montieren. Vorteilhaft ist es jedoch, wenn die Einspannbefestigung in einem plattenförmigen Teilbereich des Trägerelements an diesem angreift.

Ein bevorzugtes Anwendungsbeispiel gemäß der Erfindung sieht vor, dass das vorzugsweise plattenförmige Trägerelement ein Flansch eines T-Trägers oder Doppel-T-Trägers ist.

Damit mit Hilfe der erfindungsgemäßen Einspannbefestigung auch eine stabile Rohrbefestigung an dem Flansch eines T-Trägers angebunden werden kann, ist es vorteilhaft, wenn die Einspannbefestigung zumindest zwei, paarweise auf einem gemeinsamen Gewindestab angeordnete Spannhaken hat, die beidseits an den gegenüberliegenden Rändern des Trägerelements angreifen und dieses zwischen sich einspannen.

Weiterbildungen gemäß der Erfindung ergeben sich aus der nachfolgenden Beschreibung eines bevorzugten Ausführungsbeispieles in Verbindung mit den Ansprüchen sowie der Zeichnung. Nachstehend wird die Erfindung anhand eines bevorzugten Ausführungsbeispieles noch näher beschrieben.

Es zeigt:
- Fig. 1: eine in einer perspektivischen Darstellung gezeigte Einspannbefestigung zur Anbindung einer Rohrhalterung an dem als Trägerelement dienenden oberen Flansch eines T-Trägers, wobei die Einspannbefestigung am Flansch des T-Trägers beidseits randseitig angreifende Spannhaken hat, die paarweise einander zugeordnet sind und wobei die Spannhaken-Paare jeweils über einen Gewindestab miteinander verbunden sind, an welchen die Rohrhalterung über die Spannhaken gehalten ist,
- Fig. 2: die mit der Rohrhalterung verbundene Einspannbefestigung aus Fig. 1 in einer Seitenansicht,
- Fig. 3: die bereits in den Fig. 1 und 2 gezeigte Einspannbefestigung mit der Rohrhalterung in einer gegenüber Fig. 2 um 90° gedrehten Seitenansicht,
- Fig. 4: einen der am Flansch des T-Trägers angreifenden Spannhaken der in den Fig. 1 bis 3 gezeigten Einspannbefestigung in einer Perspektivdarstellung,
- Fig. 5: die auf dem oberen Flansch des T-Trägers angeordnete Einspannbefestigung aus den Fig. 1 bis 3 in einer Seitenansicht,
- Fig. 6: einen der am Flansch des T-Trägers angreifenden Spannhaken, wobei dieser Spannhaken mittels einer auf dem Gewindestab aufsitzenden und von einer Spannmutter beaufschlagten Druckhülse fest gegen den Flansch gedrückt wird,
- Fig. 7: den Spannhaken in der bereits in Fig. 6 gezeigten Position in einem Teil-Längsschnitt,
- Fig. 8: den längsgeschnittenen Spannhaken aus Fig. 6 und 7, wobei die über die Druckhülse in den Spannhaken eingetragenen Druck- und Einspannkräfte angedeutet sind,
- Fig. 9: den Spannhaken aus Fig. 6 bis 8 in einer Perspektivdarstellung ohne Gewindestab, Druckhülse und Spannmutter,
- Fig. 10: die dem Spannhaken zugeordnete Druckhülse in einer, im vergrößerten Maßstab gezeigten Perspektivdarstellung,
- Fig. 11: eine in einer Seitenansicht dargestellte weitere Einspannbefestigung, die nicht gemäß der beanspruchten Erfindung ist, die ebenfalls am Flansch eines T-Trägers beidseitig randseitig angreifende Spannhaken hat, die über einen Gewindestab miteinander verbunden sind, der jeweils eine Befestigungsöffnung in den Spannhaken durchsetzt, wobei die Spannhaken hier jeweils mittels einer großen Spannmutter direkt und ohne eine weitere Druckhülse in einem unterhalb der zumindest einen Festigungsöffnung angeordneten Teilbereich druckbeaufschlagt werden,
- Fig. 12: eine gemäß dem Stand der Technik ausgestaltete Einspannbefestigung in einer Seitenansicht,
- Fig. 13: einen der am Flansch eines T-Trägers angreifenden Spannhaken der zum Stand der Technik gehörenden Einspannbefestigung aus Fig. 12, und
- Fig. 14: den Spannhaken aus Fig. 13, der mittels einer auf einen Gewindestab aufgeschraubten Spannmutter gegen den benachbarten Längsrand am oberen Flansch eines T-Trägers gepresst wird.

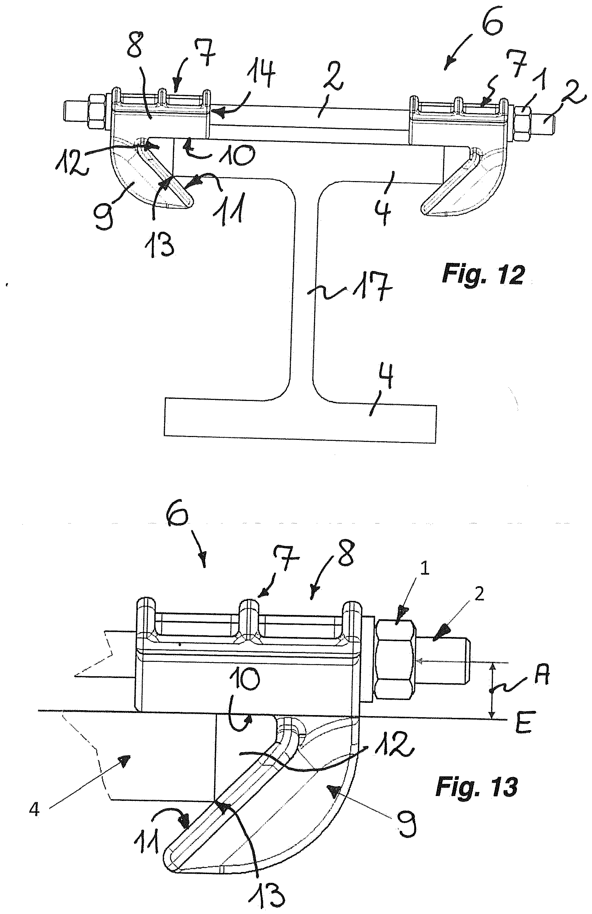

In Fig. 12 ist eine zum Stand der Technik gehörende Einspannbefestigung 6 gezeigt, die zur Anbindung einer hier nicht weiter gezeigten Rohrhalterung an dem als Trägerelement dienenden Flansch 4 eines T-Trägers oder Doppel-T-Trägers dient. Diese Einspannbefestigung 6 gemäß dem Stand der Technik weist Spannhaken 7 auf, die einander paarweise zugeordnet sind. Die Spannhaken 7 eines jeden Spannhaken-Paares greifen beidseits randseitig am Flansch 4 des T-Trägers an. Jeder der Spannhaken 7 hat zwei Hakenarme 8, 9, von denen ein erster Hakenarm 8 eine Auflagefläche 10 zur Auflage auf dem Trägerelement, nämlich dem Flansch 4 des T-Trägers, aufweist und von denen ein zweiter Hakenarm 9 eine Klemmfläche 11 hat, die mit der Auflagefläche 10 eine Hakenöffnung 12 begrenzt und die relativ zur Auflagefläche 10 derart in einem Winkel angeordnet ist, dass die Klemmfläche 11 an dem der Auflagefläche 10 abgewandten Rand 13 des Trägerelements angreift. Der erste Hakenarm 8 weist zumindest eine Befestigungsöffnung 14 auf, die zwangsläufig oberhalb der durch die Auflagefläche 10 gebildeten Ebene E angeordnet ist und die ein Gewindestab 2 durchsetzt. Jeder Gewindestab 2 trägt beidseits des als Trägerelement dienenden Flansches 4 jeweils einen der Spannhaken 7, so dass die Spannhaken 7 eines jeden Spannhaken-Paares den Flansch 4 zwischen sich einspannen und die Einspannbefestigung 6 fest am T-Träger halten können.

Auf die beiden freien Stabenden des Gewindestabes 2 ist jeweils eine Spannmutter 1 aufgeschraubt, die den benachbarten Spannhaken 7 in der in Fig. 12 gezeigten Halteposition an dem als Trägerelement dienenden Flansch 4 des T-Trägers druckbeaufschlagt.

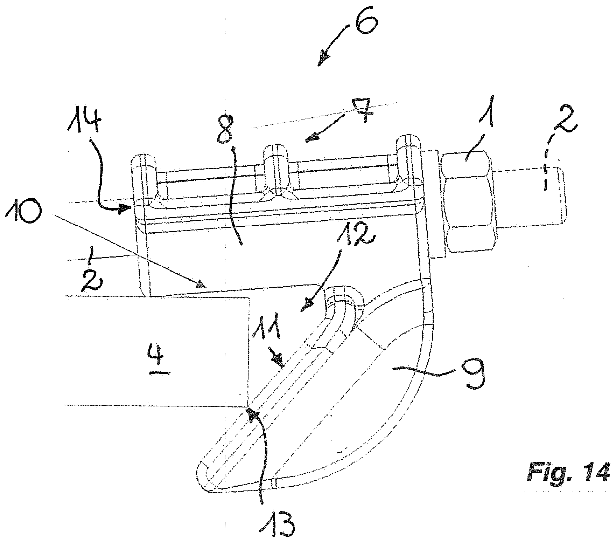

Wie aus den Fig. 13 und 14 deutlich wird, wird durch das Anziehen der Spannmuttern 1 der benachbarte Spannhaken 7 gegen den Flansch des T-Trägers gedrückt. Durch das Abstandsmaß von Trägerflanschoberkante zum Druckpunkt, nämlich dem Kraftangriffspunkt der Spannmutter 1 am Flansch 4, wird ein Drehmoment erzeugt, welches die relativ zur Auflagefläche 10 am ersten Hakenarm 8 um etwa 45° schräg geneigte Klemmfläche 11 des Spannhakens 7 unter dem Trägerflansch 4 herauszieht, wie dies in Fig. 14 angedeutet ist. In Fig. 14 ist die Verdrehung des Spannhakens 7 nach dem Anziehen der Spannmutter 1 dargestellt. Hierdurch wird die mögliche Kraftaufnahme des Spannhakens 7 bei der gemäß dem Stand der Technik ausgebildeten Einspannbefestigung 6 deutlich vermindert.

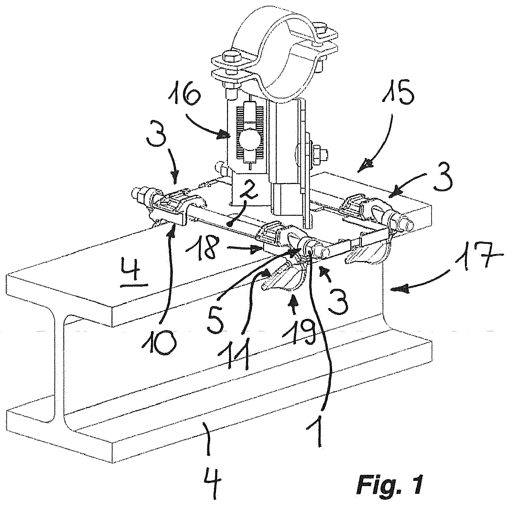

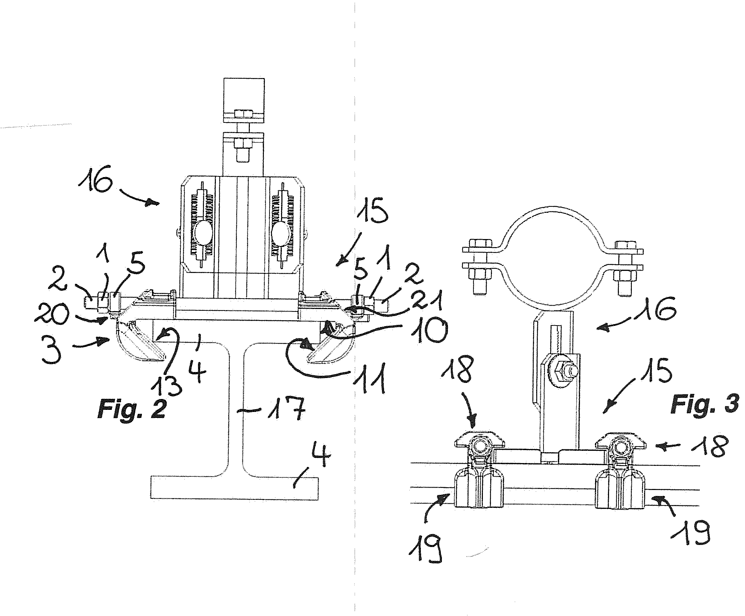

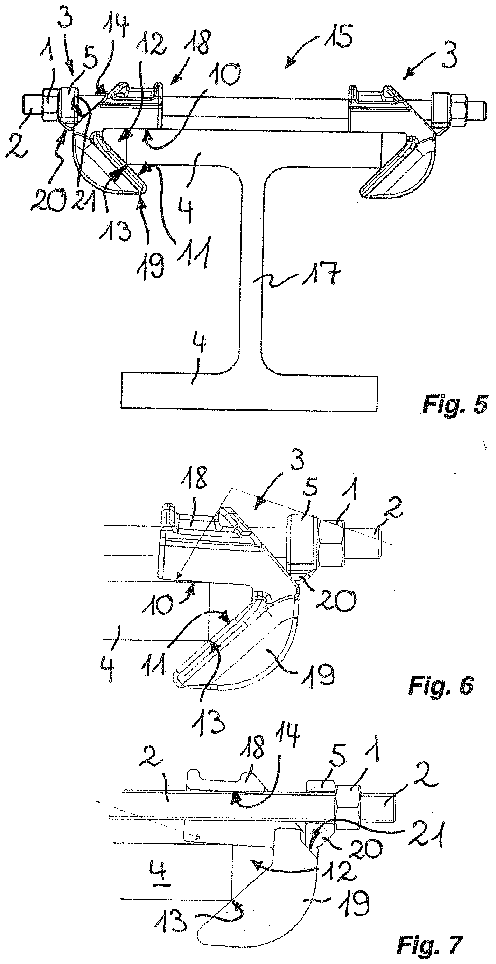

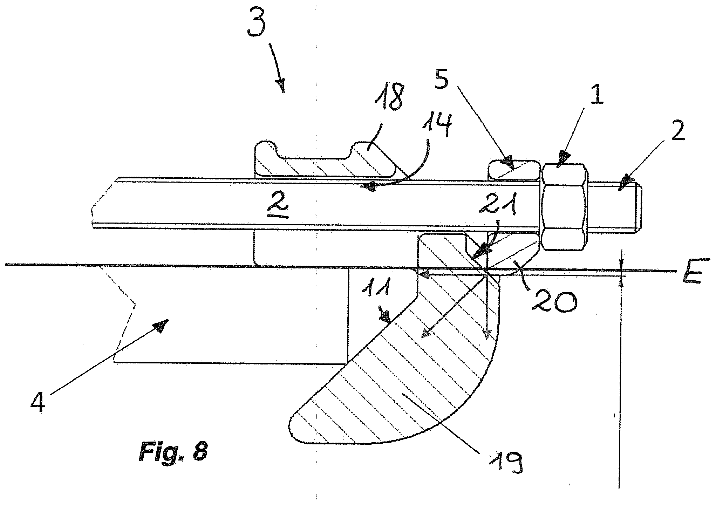

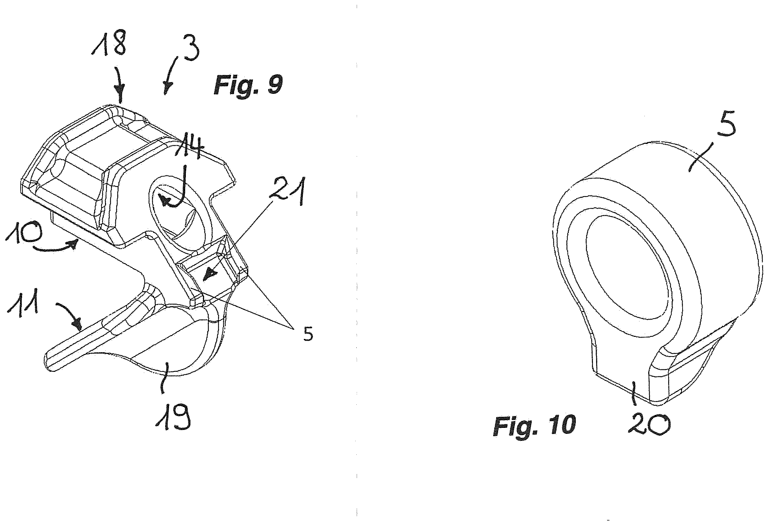

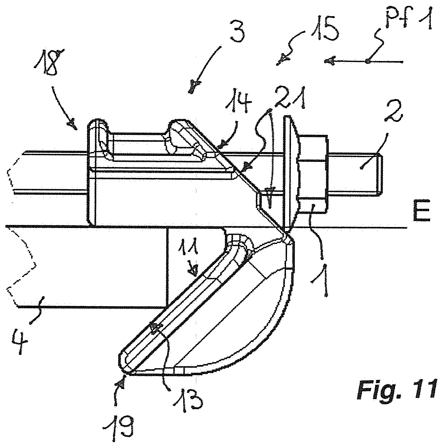

Mit Hilfe der in den Fig. 1 bis 10 gezeigten erfindungsgemäßen Einspannbefestigungen 15 wird einem Verdrehen der Spannhaken 3 nach dem Anziehen der Spannmuttern 1 und einer dadurch bedingten Reduktion der möglichen Kraftaufnahme der Spannhaken 3 entgegengewirkt. Auch die erfindungsgemäßen Einspannbefestigungen 15, gemäß den Fig. 1 bis 10 einerseits und gemäß Fig. 11 andererseits, die ebenfalls zur Anbindung beispielsweise der in den Fig. 1 bis 3 gezeigten Rohrhalterung 16 an dem als Trägerelement dienenden Flansch 4 eines T-Trägers 17 bestimmt sind, weisen zumindest einen und vorzugsweise mehrere, einander paarweise zugeordnete Spannhaken 3 auf. Diese Spannhaken 3 sind einander paarweise zugeordnet. Die Spannhaken 3 eines jeden Spannhaken-Paares greifen beidseits randseitig am Flansch 4 des T-Trägers 17 an. Jeder der Spannhaken 3 hat zwei Hakenarme 18, 19, von denen ein erster Hakenarm 18 eine Auflagefläche 10 zur Auflage auf dem als Trägerelement dienenden Flansch 4 aufweist und von denen ein zweiter Hakenarm 19 eine Klemmfläche 11 hat, die mit der Auflagefläche 10 eine Hakenöffnung 12 begrenzt und die relativ zur Auflagefläche 10 derart in einem Winkel von vorzugsweise 45° angeordnet ist, dass die Klemmfläche 11 an dem der Auflagefläche 10 abgewandten Rand 13 des als Trägerelement dienenden Flansches 4 des T-Trägers 17 angreift.

Der erste Hakenarm 18 weist zumindest eine Befestigungsöffnung 14 auf, die zwangsläufig oberhalb der durch die Auflagefläche 10 gebildeten Ebene E angeordnet ist und die ein Gewindestab 2 durchsetzt. Jeder Gewindestab 2 trägt beidseits des als Trägerelement dienenden Flansches 4 des T-Trägers 17 jeweils einen der Spannhaken 3, so dass die Spannhaken 3 den Flansch 4 zwischen sich einspannen und die erfindungsgemäße Einspannbefestigungen 15 fest am T-Träger halten können. Auf die beiden freien Stabenden des Gewindestabes 2 ist jeweils eine Spannmutter 1 aufgeschraubt, die den benachbarten Spannhaken 3 in der Halteposition am Trägerelement druckbeaufschlagt.

Bei den in den Fig. 1 bis 10 dargestellten erfindungsgemäßen Einspannbefestigungen 15 ist vorgesehen, dass die Spannhaken 3 jeweils mittels der zugeordneten Spannmutter 1 in dem unterhalb der zumindest einen Befestigungsöffnung 14 und vorzugsweise unterhalb der durch die Auflagefläche gebildeten Ebene angeordneten Teilbereichs druckbeaufschlagt werden.

Um die durch die Spannmutter 1 auf den benachbarten Spannhaken 3 der Einspannbefestigung 15 ausgeübte Einspann- oder Druckkraft auf der dem Gewindestab 2 abgewandten Seite der durch die Auflagefläche 10 gebildeten Ebene E in den Spannhaken 3 einbringen zu können und um einem unerwünschten Abziehen des Spannhakens 3 nach dem Anziehen der Spannmutter 1 entgegenzuwirken, ist auf dem Gewindestab 2 der in den Fig. 1 bis 10 dargestellten Einspannbefestigung 15 zwischen der Spannschraube 1 und dem Spannhaken 3 eine Druckhülse 5 vorgesehen. Diese Druckhülse 5 beaufschlagt den benachbarten Spannhaken 3 in einem unterhalb der zumindest einen Befestigungsöffnung und insbesondere unterhalb der durch die Auflagefläche 10 gebildeten Ebene E angeordneten Teilbereich. Die Druckhülse 5 hat dazu einen Vorsprung 20, der über den Außenumfang der Druckhülse 5 an dieser radial vorsteht. Die Druckhülse 5 ist auf dem Gewindestab 2 verschieblich gehalten, wobei die Druckhülse 5 mit dem Gewinde des Gewindestabes 2 außer Eingriff steht.

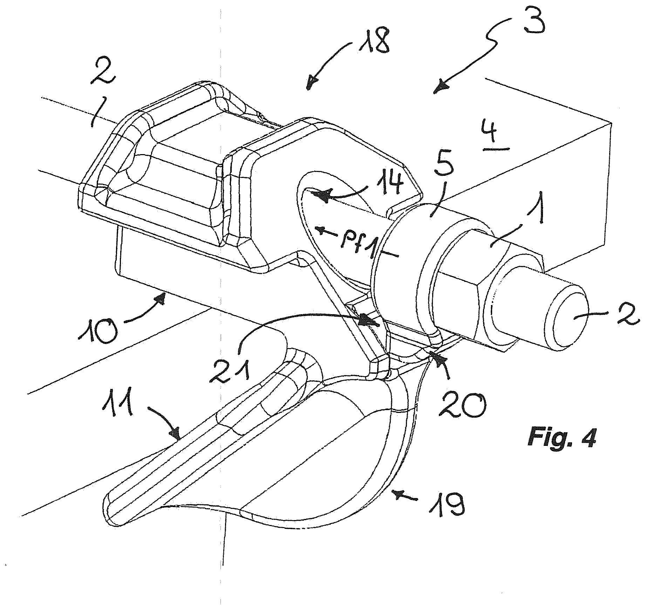

In Fig. 4 ist gut erkennbar, dass der Spannhaken 3 eine Schrägfläche 21 aufweist, die in Spannrichtung Pf 1 der Spannmutter 1 schräg auf die Befestigungsöffnung 14 hin zuläuft. Dabei beaufschlagt die Druckhülse 5 den benachbarten Spannhaken 3 im Bereich dieser Schrägfläche 21.

Die erfindungsgemäße Einspannbefestigung gemäß den Fig. 1 bis 10 ist an jedem geeigneten Trägerelement und dort vorzugsweise in einem plattenförmigen Teilbereich befestigbar. Ein bevorzugtes Anwendungsbeispiel sieht jedoch vor, dass das Trägerelement als Flansch 4 eines T-Trägers 17 oder Doppel-T-Trägers ausgebildet ist.

In den Fig. 1 bis 3 ist besonders gut erkennbar, dass die erfindungsgemäße Einspannbefestigung 15 vorzugsweise vier Spannhaken 3 hat, die paarweise einander zugeordnet sind. Dabei sind die Spannhaken 3 eines jeden Spannhaken-Paares auf einem gemeinsamen Gewindestab 2 angeordnet, so dass diese Spannhaken 3 eines jeden Spannhaken-Paares beidseits an den gegenüberliegenden Rändern 13 des als Trägerelement dienenden Flansches 4 des T-Trägers 17 angreifen und diesen Flansch 4 zwischen sich einspannen können. Die beiden Spannhaken-Paare der Einspannbefestigung 15 sind mit Abstand voneinander am Flansch 4 des T-Trägers 17 gehalten, sodass beispielsweise eine Rohrhalterung 16 in üblicher Weise an der Einspannbefestigung 15 und insbesondere an deren Gewindestäben 2 oder Spannhaken 3 gehalten werden kann.

In Fig. 11 ist eine weitere Ausführung der Einspannbefestigung 15 in einer Seitenansicht gezeigt, die ohne eine Druckhülse 5 auskommt, die nicht gemäß der beanspruchten Erfindung ist. Bei dieser vereinfachten Ausführung sind die mit den Spannhaken 3 zusammenwirkenden Spannmuttern 1 jeweils als Flanschmuttern ausgebildet. Dabei weist der dem zugeordneten Spannhaken 3 zugewandte Flansch der Spannmutter 1 einen Flanschdurchmesser auf, der so bemessen ist, dass der Spannhaken 3 unmittelbar von der Spannmutter 1 in einem unterhalb der zumindest einen Befestigungsöffnung und insbesondere unterhalb der durch die Auflagefläche gebildeten Ebene angeordneten Teilbereich des Spannhakens 3 beaufschlagt wird.

Zusätzlich oder stattdessen kann am Spannhaken 3 ein hier nicht gezeigter Vorsprung ausgebildet sein, der mit der dem Spannhaken 3 zugewandten, gegebenenfalls vergrößerten Stirnfläche der Spannmutter 1 derart zusammenwirkt, dass die Einspannkraft mittels der Spannmutter 1 auf den Spannhaken 3 in einem Spannhaken-Teilbereich übertragen wird, der unterhalb der zumindest einen Befestigungsöffnung und insbesondere unterhalb der durch die Auflagefläche 10 gebildeten Ebene angeordnet ist. Bei einer solchen, hier nicht gezeigten Ausführung ist es vorteilhaft, wenn die Spannmutter 1 mit ihrer dem Spannhaken 3 zugewandten Stirnfläche flächig auf dem am Spannhaken 3 angeformten Vorsprung zu liegen kommt.

Auf bei diesen alternativen Ausführungen der nicht erfindungsgemäßen Einspannbefestigung 15 kann die Einspannkraft auch durch eine am Gewindestab 2 wirkende Zugkraft erzeugt werden, während demgegenüber die Spannmutter 1 unverändert oder gar unverrückbar am Gewindestab 2 gehalten ist.

### Bezugszeichenliste

- 1: Spannmutter
- 2: Gewindestab
- 3: Spannhaken (gemäß den Fig. 1 bis 10 und 11)
- 4: Flansch des T-Trägers
- 5: Druckhülse
- 6: Einspannbefestigung gemäß dem Stand der Technik (Fig. 11 bis 13
- 7: Spannhaken der Einspannbefestigung 6
- 8: erster Hakenarm
- 9: zweiter Hakenarm
- 10: Auflagefläche
- 11: Klemmfläche
- 12: Hakenöffnung
- 13: Rand am Flansch 4 des T-Trägers
- 14: Befestigungsöffnung
- 15: Einspannbefestigung (gemäß den Fig. 1 bis 10 und 11)
- 16: Rohrhalterung
- 17: T-Träger (gemäß den Fig. 1 bis 3)
- 18: erster Hakenarm des Spannhakens 3
- 19: zweiter Hakenarm des Spannhakens 3
- 20: Vorsprung an der Druckhülse 5
- 21: Schrägfläche
- E: Ebene
- Pf 1: Spannrichtung

## Patentansprüche

1. Einspannbefestigung (15) mit zumindest einem Spannhaken (3), der (3) zwei Hakenarme (18, 19) hat, von denen ein erster Hakenarm (18) eine Auflagefläche (10) zur Auflage auf einem Trägerelement aufweist und von denen ein zweiter Hakenarm (19) eine Klemmfläche (11) hat, die mit der Auflagefläche (10) eine Hakenöffnung (12) begrenzt, und die (11) relativ zur Auflagefläche (10) derart im Winkel angeordnet ist, dass die Klemmfläche (11) an dem der Auflagefläche (10) abgewandten Rand (13) des Trägerelements angreift, wobei der erste Hakenarm (18) zumindest eine Befestigungsöffnung (14) aufweist, die einen Gewindestab (2) durchsetzt, auf den eine Spannmutter (1) aufgeschraubt ist, die den Spannhaken (3) in einer Halteposition am Trägerelement druckbeaufschlagt, und wobei der zumindest eine Spannhaken (3) mittels der Spannmutter (1) in einem unterhalb der zumindest einen Befestigungsöffnung (14) angeordneten Teilbereich des Spannhakens (3) druckbeaufschlagbar ist, **dadurch kennzeichnet, dass** auf dem Gewindestab (2) zwischen der Spannmutter (1) und dem Spannhaken (3) eine Druckhülse (5) vorgesehen ist, dass der Spannhaken (3) mittels der Spannmutter (1) über die Druckhülse (5) druckbeaufschlagbar ist, welche (5) den Spannhaken (3) in dem unterhalb der zumindest einen Befestigungsöffnung (14) angeordneten Teilbereich des Spannhakens (3) beaufschlagt, dass der Spannhaken (3) eine Schrägfläche (21) aufweist, die in Spannrichtung (Pf 1) der Spannmutter (1) schräg auf die Befestigungsöffnung (14) hin zuläuft, und dass die Druckhülse (5) den Spannhaken (3) im Bereich dieser Schrägfläche (21) beaufschlagt.

2. Einspannbefestigung nach Anspruch 1, **dadurch gekennzeichnet, dass** die Druckhülse (5) einen Vorsprung (20) hat, mit dem die Druckhülse (5) den Spannhaken (3) beaufschlagt.

3. Einspannbefestigung nach Anspruch 1 oder 2, **dadurch gekennzeichnet, dass** die Druckhülse (5) verschieblich auf dem Gewindestab (2) gehalten ist.

4. Einspannbefestigung nach einem der Ansprüche 1 bis 3, **dadurch gekennzeichnet, dass** die Einspannbefestigung (15) in einem plattenförmigen Teilbereich am Trägerelement angreift.

5. Einspannbefestigung nach einem der Ansprüche 1 bis 4, **dadurch gekennzeichnet, dass** das plattenförmige Trägerelement als Flansch (4) eines T-Trägers (17) oder Doppel-T-Trägers ausgebildet ist.

6. Einspannbefestigung nach einem der Ansprüche 1 bis 5, **dadurch gekennzeichnet, dass** die Einspannbefestigung (15) zumindest zwei, paarweise auf einen gemeinsamen Gewindestab (2) angeordnete Spannhaken (3) hat, die beidseits an den gegenüberliegenden Rändern (13) des Trägerelements angreifen und dieses zwischen sich einspannen.

7. Einspannbefestigung nach einem der Ansprüche 1 bis 6, **dadurch gekennzeichnet, dass** die Druckhülse (5) den Spannhaken (3) in einem unterhalb der durch die Auflagefläche (10) gebildeten Ebene (E) angeordneten Teilbereich des Spannhakens (3) beaufschlagt.

## Claims

1. Clamping fixture (15) having at least one clamping hook (3) which has two hook arms (18, 19), of which a first hook arm (18) has a bearing surface (10) for bearing on a girder element, and of which a second hook arm (19) has a clamping surface (11) which, together with the bearing surface (10), delimits a hook opening (12) and which is arranged relative to the bearing surface (10) at an angle in such a way that the clamping surface (11) acts on the edge (13) of the girder element that faces away from the bearing surface (10), wherein the first hook arm (18) has at least one fastening opening (14) which is traversed by a threaded rod (2) onto which there is screwed a clamping nut (1) which applies pressure to the clamping hook (3) to hold it in a holding position on the girder element, and wherein pressure can be applied by means of the clamping nut (1) on the at least one clamping hook (3) in a subregion of the clamping hook (3) that is arranged below the at least one fastening opening (14), **characterized in that** a pressure sleeve (5) is provided on the threaded rod (2) between the clamping nut (1) and the clamping hook (3), **in that** pressure can be applied to the clamping hook (3) by means of the clamping nut (1) via the pressure sleeve (5), which pressure sleeve (5) acts on the clamping hook (3) in the subregion of the clamping hook (3) that is arranged below the at least one fastening opening (14), **in that** the clamping hook (3) has an oblique surface (21) which runs obliquely towards the fastening opening (14) in the clamping direction (Pf 1) of the clamping nut (1), and **in that** the pressure sleeve (5) acts on the clamping hook (3) in the region of this oblique surface (21).

2. Clamping fixture according to Claim 1, **characterized in that** the pressure sleeve (5) has a projection (20) by means of which the pressure sleeve (5) acts on the clamping hook (3).

3. Clamping fixture according to Claim 1 or 2, **characterized in that** the pressure sleeve (5) is held displaceably on the threaded rod (2).

4. Clamping fixture according to one of Claims 1 to 3, **characterized in that** the clamping fixture (15) acts on the girder element in a plate-shaped subregion.

5. Clamping fixture according to one of Claims 1 to 4, **characterized in that** the plate-shaped girder element takes the form of a flange (4) of a T-girder (17) or double-T-girder.

6. Clamping fixture according to one of Claims 1 to 5, **characterized in that** the clamping fixture (15) has at least two clamping hooks (3) which are arranged in pairs on a common threaded rod (2) and which act on both sides on the opposite edges (13) of the girder element and clamp the latter between them.

7. Clamping fixture according to one of Claims 1 to 6, **characterized in that** the pressure sleeve (5) acts on the clamping hook (3) in a subregion of the clamping frame (3) that is arranged below the plane (E) formed by the bearing surface (10).

## Revendications

1. Fixation de serrage (15) avec au moins un crochet de serrage (3) qui a deux bras de crochet (18, 19) dont un premier bras de crochet (18) comporte une surface d'appui (10) prenant appui sur un élément porteur et dont un deuxième bras de crochet (19) a une surface de serrage (11) qui délimite une ouverture de crochet (12) avec la surface d'appui (10) et qui est disposée en angle par rapport à la surface d'appui (10) de sorte que cette surface de serrage (11) s'applique sur le bord (13) de l'élément porteur opposé à la surface d'appui (10), le premier bras de crochet (18) comportant au moins une ouverture de fixation (14) que traverse une tige filetée (2) sur laquelle est vissé un écrou de serrage (1) qui maintient sous pression le crochet de serrage (3) dans une position de maintien sur l'élément porteur, et l'au moins un crochet de serrage (3) pouvant être maintenu sous pression au moyen de l'écrou de serrage (1) dans une zone du crochet de serrage (3) située au-dessous de l'au moins une ouverture de fixation (14), **caractérisée en ce qu'**une bague de pression (5) est prévue sur la tige filetée (2) entre l'écrou de serrage (1) et le crochet de serrage (3), que le crochet de serrage (3) peut être maintenu sous pression au moyen de l'écrou de serrage (1) sur la bague de pression (5), laquelle (5) appuie sur le crochet de serrage (3) dans la zone du crochet de serrage (3) située au-dessous de l'au moins une ouverture de fixation (14), que le crochet de serrage (3) présente une surface inclinée (21) qui pointe en biais vers l'ouverture de fixation (14) dans la direction de serrage (Pf 1) de l'écrou de serrage (1), et que la bague de pression (5) appuie sur le crochet de serrage (3) dans la région de cette surface inclinée (21).

2. Fixation de serrage selon la revendication 1, **caractérisée en ce que** la bague de pression (5) possède une protubérance (20) avec laquelle la bague de pression (5) appuie sur le crochet de serrage (3).

3. Fixation de serrage selon la revendication 1 ou 2, **caractérisée en ce que** la bague de pression (5) est retenue de manière coulissante sur la tige filetée (2).

4. Fixation de serrage selon une des revendications 1 à 3, **caractérisée en ce que** cette fixation de serrage (15) s'applique sur l'élément porteur dans une zone en forme de plaque.

5. Fixation de serrage selon une des revendications 1 à 4, **caractérisée en ce que** l'élément porteur en forme de plaque est configuré comme une bride (4) d'une poutre en T (17) ou d'une poutre en double T.

6. Fixation de serrage selon une des revendications 1 à 5, **caractérisée en ce que** cette fixation de serrage (15) a au moins deux crochets de serrage (3) disposés par paire sur une tige filetée (2) commune qui s'appliquent des deux côtés sur les bords (13) opposés de l'élément porteur et serrent celui-ci entre eux.

7. Fixation de serrage selon une des revendications 1 à 6, **caractérisée en ce que** la bague de pression (5) applique le crochet de serrage (3) dans une zone du cadre de serrage (3) située au-dessous du plan (E) formé par la surface d'appui (10).
